Europäisches Patentamt

European Patent Office

Office européen des brevets

(11) Veröffentlichungsnummer: **0 486 892 A1**

# EUROPÄISCHE PATENTANMELDUNG

(21) Anmeldenummer: **91119029.6**

(22) Anmeldetag: **07.11.91**

(51) Int. Cl.5: **H05B 3/26**, H05B 3/28, F24D 13/02

(30) Priorität: **19.11.90 DE 4036849**

(43) Veröffentlichungstag der Anmeldung:
**27.05.92 Patentblatt 92/22**

(84) Benannte Vertragsstaaten:
**AT BE CH DE FR GB IT LI LU NL**

(71) Anmelder: **BUCHTAL GmbH**
**Buchtalweg**
**W-8472 Schwarzenfeld(Opf.)(DE)**

(72) Erfinder: **Bard, Martin**
**Eichenforstgässchen 9**
**W-8450 Amberg(DE)**
Erfinder: **Cremer, Gottfried, Dr.**
**Steyrer Weg 6**
**W-5000 Köln 40(DE)**

(74) Vertreter: **Herrmann-Trentepohl, Werner,**
**Dipl.-Ing. et al**
**Kirschner, Grosse, Bockhorni Forstenrieder**
**Allee 59**
**W-8000 München 71(DE)**

(54) **Elektrisch beheizbare keramische Platte.**

(57) Eine elektrisch beheizbare keramische Platte, welche über ein Mörtel- oder Klebebett auf einem Untergrund verlegbar oder bei Auflagerung auf Stützen für eine Doppelbodenkonstruktion verwendbar ist, wird gebildet aus einem Verbund aus einer die Sichtseite bildenden keramischen Deckplatte, einer stabilen, bzw. steifen Bodenplatte und einer Zwischenschicht zwischen Deck- und Bodenplatte, in welcher mindestens ein Heizleiterelement bzw. ein Heizleiterkabel aufgenommen ist.

Figur 1

Die Erfindung betrifft eine elektrisch beheizbare keramische Platte, insbesondere für die Verwendung als Wand- oder Bodenbelag.

Es sind beheizbare Beläge aus keramischen Platten bekannt (EP-B- 0 231 913), bei denen die Heizschicht aus einer elektrisch leitenden Beschichtung auf der der Sichtseite der keramischen Platte abgewandten Seite gebildet ist. Derartige beheizbare keramische Platten haben sich in der Praxis als sehr geeignet herausgestellt, weil sie bei vergleichsweise kompakter Bauhöhe eine regelbare Beheizung von Räumen bei einem gesunden Heizklima gewährleisten. Keramische Platten sind allerdings spröde, so daß es mitunter zu einer Bruch- oder Rißbildung der keramischen Deckplatten derartiger Beläge kommen kann, so daß bei Feuchtigkeitszutritt die Gefahr eines zwar nicht gefährlichen, jedoch unangenehmen Stromschlags besteht. Um dies zu vermeiden, sind entsprechende Vorkehrungen an den konventionellen beheizbaren Platten zu treffen, die mit einem fertigungstechnischen Aufwand verbunden sind.

Aufgabe der Erfindung ist es, hier für einen zweiten Weg parallel zum oben beschriebenen Stand der Technik zu sorgen und einen keramischen Wand- oder Bodenbelag aus keramischen Platten zu schaffen, bei dem selbst im Falle einer Beschädigung der keramischen Deckplatte jedweder Stromschlag und damit jedwede Gefährdung oder Beeinträchtigung von den Belag betretenden Personen ausgeschlossen wird. Hierbei soll dies durch einfache Maßnahmen bewerkstelligt werden.

Diese Aufgabe wird erfindungsgemäß durch die Merkmale des Anspruchs 1 gelöst, wobei zweckmäßige Weiterbildungen der Erfindung durch die in den Unteransprüchen enthaltenen Merkmale gekennzeichnet sind.

Nach Maßgabe der Erfindung wird das Heizleiterkabel bzw. das Heizleiterelement in eine Zwischenschicht eines Verbundelements, bestehend aus einer keramischen Deckplatte, einer Zwischenschicht und einer steifen Bodenplatte angeordnet, so daß das Heizleiterelement praktisch allseitig, d.h. oben und unten von einer Platte abgedeckt und im besonderen in der Zwischenschicht aufgenommen ist. Hierbei ist es zweckmäßig das Heizleiterelement als Heizleiterkabel, also mit einer isolierenden Ummantelung zu versehen, wobei bei Bedarf jedoch auch die Zwischenschicht elektrisch isoliert ausgebildet sein kann. Insbesondere ist aber die Zwischenschicht aus einem wärme- und alterungsbeständigem Kleber gebildet. Das Verbundelement ist noch dadurch ausgebildet, daß an den Seitenrändern Fugen aus begrenzt elastischem Material angeformt sind, so daß die Verbundelemente verlegefertige Einheiten darstellen.

Besonders zweckmäßig ist es, innerhalb der Zwischenschicht den Heizleiter im oberflächennahen Bereich bezüglich der keramischen Deckplatte anzuordnen, so daß der Heizeffekt auf die keramische Deckplatte konzentriert ist. Hierbei ist es von Vorteil, die Bodenplatte aus einem schlecht wärmeleitenden Material herzustellen. Ein inniger Verbund und auch eine geringe Bauhöhe lassen sich dadurch erzielen, daß die Heizleiter bzw. Heizleiterkabel in entsprechenden Ausnehmungen an der der Zwischenschicht zugewandten Fläche der Bodenplatte und/oder der keramischen Deckplatte eingebettet sind (Verzahnungseffekt über die Zwischenschicht). Begrenzt elastische Einstellung der Fuge, die zweckmäßigerweise aus modifiziertem PU-Kunststoff hergestellt ist, bedeutet, daß die Fuge hinreichend steif ist, jedoch noch ausreichend elastisch, so daß beim Zusammensetzen benachbarter Verbundelemente ein geschlossener Fugenverband entsteht, so daß also etwaige Versetzungen der Platten innerhalb der Fuge ausgeglichen werden können.

Nachfolgend werden Ausführungsbeispiele der Erfindung anhand der Zeichnung beschrieben. Darin zeigen:

Fig. 1    ein Verbundelement mit einer keramischen Platte in Schnittansicht, wobei das Verbundelement in der linken Hälfte der Figur auf einem Mörtelbett und in der rechten Hälfte der Figur auf einer Stützkonstruktion einer Doppelbodenkonstruktion verlagert ist, sowie

Fig. 2    eine Einzelheit einer abgewandelten Ausführungsform, wobei nur die keramische Deckplatte und die Zwischenschicht dargestellt ist.

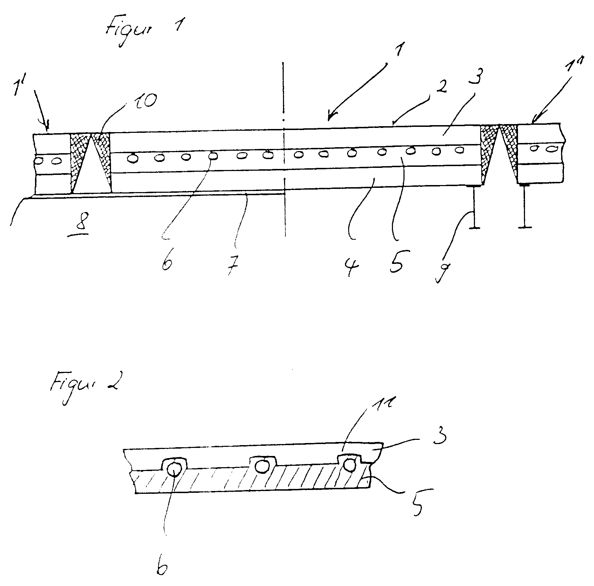

Figur 1 zeigt ein allgemein mit 1 bezeichnetes Verbundelement, welches gebildet ist aus einer die Sichtfläche 2 bildenden keramischen Deckplatte 3, einer unteren Bodenplatte 4 und einer zwischen der Deckplatte 3 und der Bodenplatte 4 angeordneten Zwischenschicht 5, in welcher mit 6 bezeichnete Heizleiter, insbesondere Heizleiterkabel aufgenommen sind.

In der linken Hälfte der Figur 1 ist das Verbundelement 1 über ein mit 7 bezeichnetes Klebebett auf einem Untergrund 8 verlegt, wohingegen in der rechten Figurenhälfte das Verbundelement 1 auf Stützen 9 zur Bildung einer Doppelbodenkonstruktion verlagert ist. In beiden Hälften sind seitlich anschließende weitere Verbundelemente 1 ` und 1 `` nur teilweise dargestellt.

Gemäß Figur 1 sind die Heizleiterkabel 6 bestehend aus einem leitendem Drahtkern und einem den Kern umgebenden Isoliermantel im oberflächennahen Bereich bezüglich der keramischen Deckplatte 3 innerhalb der Zwischenschicht 5 angeordnet, was aus Gründen einer besseren Beheizbarkeit der keramischen Deckplatte 3 vorzuziehen ist. Die Zwischenschicht 5 ist aus PU-Schaum gebildet, kann jedoch aus einem anderen geeigneten Material gebildet sein. Die Bodenplatte 4 kann insbesondere durch eine keramische Platte gebildet sein, es sind aber auch andere Materialien möglich, insbesondere Spanplatten und dergleichen. Das Verbundelement 1 bildet infolge der dazwischen angeordneten Heizleiterschicht eine Sicherungsvorrichtung, die einen Stromschlag selbst dann verhindert, wenn es aus irgendwelchen Gründen zu einer Rißbildung innerhalb der keramischen Deckplatte 3 oder zu einem Bruch der keramischen Deckplatte 3 kommt. Dadurch eignet sich das Verbundelement 1 aus Deckplatte, Bodenplatte und dazwischenliegender Heizleiterschicht besonders gut für die Bildung eines beheizbaren Bodenbelags, da aufgrund dieser Konstruktion auch erhöhte Sicherheitskriterien, die für elektrisch beheizbare Bodenbeläge vorgeschrieben sind, bzw. vorgeschrieben werden können, mit Zuverlässigkeit erfüllt werden können.

Das Verbundelement 1 ist an seinen Seitenrändern umlaufend mit einer angegossenen Fuge 10 versehen, die im dargestellten Ausführungsbeispiel keilförmig gebildet ist und zweckmäßigerweise aus modifiziertem Polyurethan-Material mit begrenzt elastischer Einstellung besteht. Das heißt, das Fugenmaterial muß ausreichend steif sein, jedoch derart elastisch, daß ein geschlossener Fugenverband beim seitlichen Anschluß weiterer Verbundelemente 1 entsteht.

Im Falle einer Doppelbodenkonstruktion ist die Bodenplatte 4 zweckmäßigerweise aus Leichtbeton oder Anhydrit hergestellt, wobei dann die der Haftfunktion dienende Zwischenschicht 5 auf eine geringe Höhe abgemagert werden kann, indem die Heizkabel zumindest teilweise in Ausnehmungen, in der der Zwischenschicht zugewandten Fläche der Bodenplatte 4 eingebettet sind.

Die Einbettung des Leitelements bzw. des Heizleiterkabels in eine entsprechende Ausnehmung ist anhand Figur 2 dargestellt, wobei hier Ausnehmungen 11 an der Unterseite der keramischen Deckplatte 3 vorgesehen sind, in welcher zumindest teilweise die Heizleiterkabel 6 vorstehen, wodurch sich ein verzahnender Verbund mit der in die Ausnehmungen 6 eindringenden Zwischenschicht 5 ergibt.

Das Verbundelement stellt eine verlegefertige Einheit dar, die unmittelbar über ein Klebe- oder Mörtelbett vor Ort auf eine Unterkonstruktion verlegt werden kann oder zur Bildung einer Doppelkonstruktion auf Stützen 9 verlagert werden kann. Der Vorteil der angeformten Fugen besteht nicht zuletzt darin, daß im freien Zwischenbereich Kanäle zur Aufnahme der Anschlußkabel gebildet werden. In einer bewährten Ausführungsform setzt sich das Verbundelement aus einer keramischen Deckplatte mit einer Stärke von 8 Millimetern, einer Zwischenschicht mit einer Stärke von 8 Millimetern aus PU - Schaum und einer unteren keramischen Bodenplatte mit einer Stärke von 8 Millimetern zusammen, so daß der Gesamtaufbau eine Wandstärke von 24 Millimetern aufweist. Hierbei wurde ein sämtlichen bestehenden Sicherheitsbestimmungen gerecht werdendes beheizbares Element als verlegefertige Einheit geschaffen.

## Patentansprüche

1. Elektrisch beheizbare keramische Platte, welche über ein Mörtel- oder Klebebett (7) auf einem Untergrund (8) verlegbar oder bei Auflagerung auf Stützen (9) für eine Doppelbodenkonstruktion verwendbar ist, gebildet aus einem Verbund aus einer die Sichtseite (2) bildenden keramischen Deckplatte (3), einer stabilen, bzw. steifen Bodenplatte (4) und einer Zwischenschicht (5) zwischen Deck- und Bodenplatte, in welcher mindestens ein Heizleiterelement bzw. ein Heizleiterkabel (6) aufgenommen ist.

2. Keramische Platte als Verbundelement nach Anspruch 1, bei der das Heizleiterkabel (6) im bezüglich der keramischen Deckplatte (3) oberflächennahen Bereich der Zwischenschicht (5) angeordnet ist.

3. Keramische Platte als Verbundelement nach Anspruch 2, bei der das Heizleiterkabel (6) in Berührkontakt mit der der Sichtfläche der keramischen Deckplatte (3) abgewandten Fläche der Deckplatte stehend in der Zwischenschicht (5) aufgenommen ist.

4. Keramische Platte als Verbundelement, nach einem der vorhergehenden Ansprüche bei der an den Seitenwänden des Verbundelements (1) umlaufend eine Fuge (10) aus begrenzt elastisch eingestelltem Material angegossen ist.

5. Keramische Platte als Verbundelement nach Anspruch 4, bei der die Fuge aus modifiziertem PU-Material mit begrenzt elastischer Einstellung gebildet ist.

6. Keramische Platte als Verbundelement nach einem der vorhergehenden Ansprüche, bei der die Fuge keilförmig sich von unten nach oben und außen erweiternd ausgebildet ist.

7. Keramische Platte als Verbundelement nach einem der vorhergehenden Ansprüche, **dadurch gekennzeichnet**, daß die Zwischenschicht (5) aus einem wärme- und alterungsbeständigem Kleber, insbesondere einem Zwei-Komponenten Kleber hergestellt ist.

8. Keramische Platte als Verbundelement nach einem der vorhergehenden Ansprüche, **dadurch gekennzeichnet**, daß die Heizleiter in Ausnehmungen der der Zwischenschicht (5) zugeordneten Fläche der keramischen Deckplatte (3) oder der Bodenplatte (4) angeordnet sind.

Figur 1

Figur 2

Europäisches
Patentamt

# EUROPÄISCHER RECHERCHENBERICHT

Nummer der Anmeldung

EP 91 11 9029

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | WO-A-8 911 202 (HEGSTAD, B.) <br> * Ansprüche 1,3,4; Abbildung 1 * <br> --- | 1 | H05B3/26 <br> H05B3/28 <br> F24D13/02 |
| A | GB-A-224 321 (GRIERSON LTD.) <br> * Seite 2, Zeile 90 - Zeile 126; Abbildung 1 * <br> --- | 1 | |
| A | CH-A-106 154 (GRAU,H.) <br> * Abbildung 1 * <br> --- | 2,3 | |
| A | FR-A-2 008 334 (GAISER ET AL.) <br> * Seite 8, Zeile 33 - Zeile 36 * <br> --- | 7 | |
| A | FR-A-764 622 (DOHERTY RESEARCH CO.) <br> * Abbildungen 1,2 * <br> ----- | 8 | |

|  |
|---|
| RECHERCHIERTE SACHGEBIETE (Int. Cl.5 ) |
| H05B <br> F24D |

Der vorliegende Recherchenbericht wurde für alle Patentansprüche erstellt

| Recherchenort | Abschlußdatum der Recherche | Prüfer |
|---|---|---|
| DEN HAAG | 03 MAERZ 1992 | Gagliardi |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
.............................................................
& : Mitglied der gleichen Patentfamilie, übereinstimmendes
    Dokument

EPO FORM 1503 03.82 (P0403)